# EUROPÄISCHE PATENTSCHRIFT

(11) **EP 4 522 891 B1**
(45) Veröffentlichungstag und Bekanntmachung des Hinweises auf die Patenterteilung: **02.12.2026**
(21) Anmeldenummer: 23730709.5
(22) Anmeldetag: 12.04.2023
(51) Int. Cl.: F16H 63/34, F16H 59/68

(54) **AKTUATOR**
ACTUATOR
ACTIONNEUR

(30) Priorität: 10.05.2022 DE 102022111598
(43) Veröffentlichungstag der Anmeldung: 19.03.2025
(73) Patentinhaber: Schaeffler Technologies AG & Co. KG, 91074 Herzogenaurach (DE)
(72) Erfinder: HAAS, Maximilian, 77815 Bühl (DE); DIETRICH, Markus, 77704 Oberkirch (DE)
(74) Vertreter: Schaeffler Technologies
(86) Internationale Anmeldenummer: PCT/DE2023/100268
(87) Internationale Veröffentlichungsnummer: WO 2023/217314

(56) Entgegenhaltungen:
- WO-A1-2022/258095
- DE-A1- 102011 014 574
- DE-T5- 112013 004 884
- US-A1- 2011 303 085

## Beschreibung

Die Erfindung betrifft einen Aktuator, insbesondere Parksperrenaktuator, zur mittelbaren oder unmittelbaren Arretierung einer Antriebskomponente eines Kraftfahrzeugs und eine Kraftfahrzeugkomponente zur elektrohydraulischen Betätigung von Kraftfahrzeugaggregaten, durch die eine bauraumsparende und messgenaue Sensoranordnung zur Positionsbestimmung eines Hydraulikkolbens ermöglicht wird.

Aus DE 10 2020 114 933 A1 ist ein Betätigungsaktuator für eine Parksperre bekannt, der einen Stellungsdetektor in Form eines Magnetfeldsensors, welcher mit dem in das Betätigungselement integrierten Permanentmagneten entlang der Betätigungsachse zusammenwirkt, aufweist.

Die DE 10 2011 014 574 A1 offenbart ein Linearwegmesssystem für Hydraulik- oder Kupplungsaktuatoren, bei dem ein Permanentmagnet über ein Kugelgelenk mit einer Kolbenstange gekoppelt ist und sich relativ zu einem im Gehäuse angeordneten Sensor axial bewegt. Die Magnetbefestigung erfolgt außerhalb der Kolbenstange; ein in die Stange integrierter Hohlraum ist nicht vorgesehen.

Aus der US 2011/0303085 A1 ist ein Zylinder-Kolben-Antrieb bekannt, dessen Positionsmessung mittels PLCD-Sensor im Zylinderdeckel erfolgt; der Signalgeber ist ringförmig am Kolben angebracht. Der Sensor ist koaxial zur Kolbenstange angeordnet, ein axial geöffneter Hohlraum in der Stange oder eine radial versetzte Sensornische fehlen.

Die WO 2022/258095 A1 veranschaulicht einen elektro-hydraulisch betätigten Aktuator für eine Parksperre mit komplexem Haltemechanismus, Stopperelement und integrierter Rückstellfeder. Das Dokument behandelt weder eine Magnet-Sensor-Anordnung noch die Unterbringung eines Magneten in einer Kolbenstange.

Die DE 11 2013 004 884 T5 zeigt einen hydraulischen Spann- bzw. Verriegelungsaktuator mit einem in den Kolbenraum eingesetzten Verschlussdeckel. Eine Kolbenstange trägt einen Permanentmagneten; im Deckel ist ein Hallsensor koaxial angeordnet. Der Magnet sitzt in einer axialen Ausnehmung der Stange, jedoch wird er nicht über ein separates Press- oder Federelement fixiert, und der Sensor befindet sich auf der dem Kolbenraum zugewandten Seite des Deckels, nicht in einer außenliegenden Stirntasche.

Es besteht ein ständiges Bedürfnis den Bauraumbedarf einer Sensoranordnung in einem Aktuator zu reduzieren und gleichzeitig die Messgenauigkeit der Sensoranordnung zu verbessern.

Es ist die Aufgabe der Erfindung Maßnahmen aufzuzeigen, die eine bauraumsparende und messgenaue Sensoranordnung in einem Aktuator ermöglichen.

Die Lösung der Aufgabe erfolgt durch einen Aktuator mit den Merkmalen des Anspruchs 1 und einer Kraftfahrzeugkomponente mit den Merkmalen des Anspruchs 9. Bevorzugte Ausgestaltungen der Erfindung sind in den Unteransprüchen angegeben.

Eine Ausführungsform betrifft einen Aktuator, insbesondere Parksperrenaktuator, zur mittelbaren oder unmittelbaren Arretierung einer Antriebskomponente eines Kraftfahrzeugs, aufweisend einen Grundkörper mit einem Kolbenraum zur Aufnahme und Führung eines innerhalb des Kolbenraums axial verschiebbar gelagerten Kolbens, einen Verschlusskörper zum axialseitigen Verschließen des Kolbenraums, eine mit dem Kolben axial verschiebbar verbundene Kolbenstange zur Positionsbestimmung des Kolbens im Kolbenraum, mindestens ein mit der Kolbenstange axial verschiebbar verbundenes Magnetelement zum Bereitstellen eines Magnetfeldes und mindestens eine an dem Verschlusskörper stationär angeordnete Sensoreinheit zur Detektion des Magnetfeldes des Magnetelements, wobei die Kolbenstange einen in axialer Richtung geöffneten Hohlraum zur zumindest teilweisen Aufnahme des Magnetelements innerhalb der Kolbenstange aufweist. Dabei weist der Verschlusskörper eine Ausnehmung auf, in welcher ein Federelement gelagert ist, wobei das Federelement die Kolbenstange mit einer der Aktuierungsrichtung des Kolbens entgegengesetzten Rückstellkraft beaufschlagt und wobei die Aktuierungsrichtung eine Verschiebung des Kolbens in Richtung des Verschlusskörpers darstellt. Besonders bevorzugt erstreckt sich die Kolbenstange zumindest teilweise in axialer Richtung durch das Federelement hindurch. Das Federelement kann insbesondere axialseitig an einem sich in radialer Richtung erstreckenden ersten Endabschnitt der Kolbenstange anliegen. Das Federelement kann besonders bevorzugt axialseitig an einer sich in radialer Richtung erstreckenden Lagerfläche innerhalb der Ausnehmung des Verschlusskörpers anliegen. Die Lagerung des Federelements mit einer entgegen der Verschiebungsrichtung des Kolbens wirkenden Rückstellkraft am Verschlusskörper ermöglicht die mittelbare Beaufschlagung des Kolbens durch die Rückstellkraft des Federelements entgegen der Aktivierungsrichtung des Kolbens, bei der der Aktuator die Antriebskomponente mittelbar oder unmittelbar entsperrt. Somit wird gewährleistet, dass nach einem Druckabfall in der ersten Druckkammer der Kolben durch die Beaufschlagung der Rückstellkraft des Federelements zurückgeschoben und gleichzeitig die Kolbenstange in den Aktuator eingefahren wird. Das Federelement ist insbesondere als Schraubenfeder ausgebildet. Besonders bevorzugt ist das Federelement als Druckfeder ausgebildet. Dadurch kann das Federelement im Falle eines Bruchs immer noch ausreichend Rückstellkraft zur Verfügung stellen, um den Kolben wieder in die Ausgangsposition zurückzuverfahren und somit die Arretierung der Antriebskomponente zu bewirken. Der Verschlusskörper kann insbesondere eine sich in axialer Richtung erstreckende zylinderförmige Ausnehmung zur Aufnahme und Lagerung des Federelements aufweisen. Der Durchmesser der zylinderförmigen Ausnehmung kann insbesondere kleiner als der Durchmesser des Kolbenraums ausgebildet sein.

Besonders bevorzugt ist das Federelement mindestens zu 50% in dem Verschlusskörper angeordnet. Insbesondere ist die Kolbenstange mindestens zu 40% in dem Verschlusskörper angeordnet. Die Länge des Federelements kann im montierten Zustand mindestens zu 50% im Verschlusskörper angeordnet sein. Die Länge der Kolbenstange kann im montierten Zustand mindestens zu 40% im Verschlusskörper angeordnet sein. Dadurch kann der Kolbenraum und somit der gesamte Grundkörper des Aktuators kleiner ausgebildet und das Federelement und/oder die Kolbenstange sicher im Verschlusskörper gelagert werden. Der Kolbenraum erstreckt sich in axialer Richtung somit lediglich um die Länge des benötigten Hubbereichs, der für die erfolgreiche Arretierung oder Entsperrung der Antriebskomponente notwendig ist. Dadurch können sowohl die Herstellkosten des Grundkörpers als auch dessen Bauraumbedarf des Aktuators reduziert werden. Die Kolbenstange kann sich insbesondere in der zylinderförmigen Ausnehmung des Verschlusskörpers durch das Federelement hindurch erstrecken. Durch diese Anordnung kann zusätzlich der Bauraumbedarf des Aktuators reduziert werden.

Der Aktuator der Kraftfahrzeugkomponente, welcher insbesondere als Parksperrenaktuator ausgebildet ist, kann zur mittelbaren oder unmittelbaren Arretierung einer Antriebskomponente des Kraftfahrzeugs genutzt werden. Bei der Antriebskomponente kann es sich insbesondere um ein Kraftfahrzeuggetriebe, bevorzugt um eine Kraftfahrzeugachse, besonders bevorzugt um ein Antriebsrad des Kraftfahrzeugs oder dergleichen handeln. Die mittelbare oder unmittelbare Arretierung der Antriebskomponente kann dabei insbesondere form- und/oder kraftschlüssig durch den Aktuator erfolgen. Dadurch kann eine ungewollte Bewegung des Kraftfahrzeugs, insbesondere aus einer stehenden Parkposition heraus, verhindert werden. Dabei ist es besonders vorteilhaft den Verriegelungszustand des Aktuators zu jederzeit sicher zu kennen. Einen Aufschluss über den Verriegelungszustand kann die Position des Kolbens im Kolbenraum geben. Der in dem Kolbenraum axial verschiebbare Kolben kann insbesondere durch hydraulische Druckbeaufschlagung innerhalb des Kolbenraums verschoben werden. Die Druckbeaufschlagung des Kolbens kann bevorzugt einseitig in lediglich eine Aktivierungsrichtung, bei der der Aktuator die Antriebskomponente mittelbar oder unmittelbar entsperrt, erfolgen. Der Kolben kann insbesondere durch seine axiale Verschiebung weitere Elemente des Aktuators, insbesondere die Kolbenstange oder dergleichen, mittelbar oder unmittelbar zum form- und/oder kraftschlüssigen Arretieren oder Entsperren der Antriebskomponente, betätigen. Der Kolbenraum ist dabei axialseitig durch den Verschlusskörper verschlossen. Durch das zumindest teilweise innerhalb des Hohlraums der Kolbenstange angebrachte Magnetelement kann die Kolbenstange zur Positionsbestimmung des Kolbens verwendet werden. Die Sensoreinheit kann dabei das von dem Magnetelement innerhalb der Kolbenstange bereitgestellte Magnetfeld detektieren. Dadurch kann die sich ändernde Position der Kolbenstange, bedingt durch eine axiale Verschiebung des Kolbens, mit Hilfe der am Verschlusskörper stationär angeordneten Sensoreinheit präzise ermittelt werden. Über die sich ändernde räumliche Distanz zwischen Magnetelement und Sensoreinheit, kann die Sensoreinheit die sich ändernde Magnetfeldstärke erfassen, wodurch auch die Position des Kolbens innerhalb des Kolbenraums und somit auch der Verriegelungszustand des Aktuators bestimmt werden kann. Durch die Anordnung des Magnetelements innerhalb des Hohlraums der Kolbenstange kann der benötigte axiale und/oder radiale Bauraum im Aktuator reduziert werden. Dadurch kann zusätzlich sichergestellt werden, dass sich das Magnetelement während des Betriebs des Aktuators nicht von der Kolbenstange lösen oder sich verschieben kann. Mögliche Schwankungen des Magnetfeldes in Folge von Schwingungen oder Vibrationen können durch die Anordnung des Magnetelements innerhalb der Kolbenstange besser kompensiert oder auf ein akzeptables Maß reduziert werden. Somit wird eine bauraumsparende und messgenaue Sensoranordnung in dem Aktuator ermöglicht.

Das Funktionsprinzip von Aktuatoren, insbesondere von Parksperrenaktuatoren, ist beispielsweise aus der DE102010053861A1, DE102019119342A1, DE102020114933A1 oder der DE102021103565A1 bekannt. Der Kolbenraum des mindestens einen Aktuators kann insbesondere durch den Kolben in eine erste und eine zweite Druckkammer aufgeteilt sein. Der Kolben kann am Außenumfang mindestens eine Nut zur Aufnahme mindestens eines Dichtrings aufweisen. Durch den mindestens einen Dichtring kann verhindert werden, dass Hydraulikflüssigkeit von der ersten Druckkammer in die zweite Druckkammer übertritt. Vorzugsweise wird lediglich die erste Druckkammer hydraulisch beaufschlagt. Die Erhöhung des Drucks in der ersten Druckkammer kann somit eine Verschiebung des Kolbens in Richtung des Verschlusskörpers bewirken. Die zweite Druckkammer kann vorzugsweise drucklos zwischen dem Kolben und dem Verschlusskörper im Kolbenraum ausgebildet sein. Die axiale Breite der zweiten Druckkammer kann somit durch die Verschiebung des Kolbens verändert werden. Die axiale Verschiebung des Kolbens in Richtung der ersten Druckkammer kann insbesondere durch eine Querschnittverkleinerung des Kolbenraums begrenzt werden. Dadurch kann der Kolben lediglich entlang eines vordefinierten Hubbereichs in dem Kolbenraum axial verschoben werden. Der Aktuator weist insbesondere eine Sicherungsvorrichtung zum Verhindern einer Arretierung der Antriebskomponente durch den Aktuator bei Fahrzeuggeschwindigkeiten von mehr als 5 Kilometer pro Stunde auf. Dadurch kann sichergestellt werden, dass im Falle einer Fahrzeugstörung, in Folge derer ein Druckabfall in der ersten Druckkammer auftritt, der Aktuator die Antriebskomponente nicht während der Fahrt arretieren kann.

Der Kolben kann in axialer Richtung einen Durchgang zur Aufnahme eines sich in axialer Richtung erstreckenden ersten Endabschnitts eines Lagerelements aufweisen. Dadurch kann das Lagerelement in dem Kolben zumindest abschnittsweise angeordnet werden. Das Lagerelement kann einen sich in radialer Richtung über den Außendurchmesser des ersten Endabschnitts erstreckenden Mittelabschnitt zur Begrenzung der axialen Verschiebbarkeit des Lagerelements in den Durchgang des Kolbens aufweisen. Das Lagerelement kann eine sich in axialer Richtung in den Hohlraum der Kolbenstange erstreckenden zweiten Endabschnitt aufweisen. Dadurch kann die Kolbenstange mittelbar mit dem Kolben verbunden werden. Die Kolbenstange kann an dem Mittelabschnitt, an einer dem Kolben entgegengesetzten Seite, kontaktierend angeordnet werden. Dadurch kann jedwede Kraftübertragung von dem Kolben auf die Kolbenstange und umgekehrt im Wesentlichen über den Mittelabschnitt des Lagerelements erfolgen. Das Lagerelement kann insbesondere innerhalb des Hohlraums der Kolbenstange das Magnetelement mittelbar oder unmittelbar kraft- und/oder formschlüssig innerhalb der Kolbenstange arretieren. Dadurch kann sichergestellt werden, dass sich das Magnetelement nicht innerhalb der Kolbenstange verschiebt oder aus der Kolbenstange herausgleitet.

Die Kolbenstange kann insbesondere als Hülse ausgebildet sein. Dadurch kann die Kolbenstange kostengünstig durch Umformverfahren herstellt werden.

Das Magnetelement kann als Permanentmagnet oder dergleichen ausgebildet sein. Dadurch kann das Magnetelement ein besonders starkes Magnetfeld bereitstellen. Die Sensoreinheit kann insbesondere einen Magnetfeldsensoren aufweisen. Dadurch kann durch das Magnetelement und die Sensoreinheit die Position des Kolbens einfach und schnell detektiert und somit auch der Verriegelungszustand des Aktuators sicher bestimmt werden.

Insbesondere ist die mindestens eine Sensoreinheit innerhalb einer Aussparung am Verschlusskörper angeordnet. Die Aussparung kann insbesondere an einer dem Kolbenraum abgewandten Stirnseite des Verschlusskörpers ausgebildete sein. Dadurch kann die Sensoreinheit außerhalb des Kolbenraums an dem Verschlusskörper angeordnet werden. Somit wird eine einfache Montage, eine leichte Austauschbarkeit, ein geringer Bauraumbedarf und eine hohe Betriebsdauer der Sensoreinheit ermöglicht.

Vorzugsweise weist der Verschlusskörper einen sich in axialer Richtung der Kolbenstange erstreckenden Durchlass zur zumindest teilweisen Durchführung der Kolbenstange auf. Durch den Durchlass kann die Verschiebung der Kolbenstange durch den Verschlusskörper formschlüssig erfolgen. Dadurch können mögliche Vibrationen oder Schwingungen der Kolbenstange und somit auch des Magnetelements kompensiert oder verhindert werden.

Besonders bevorzugt sind die mindestens eine Sensoreinheit und der Durchlass zumindest teilweise im gleichen Axialbereich angeordnet. Die mindestens eine Sensoreinheit kann insbesondere in radialer Richtung beabstandet zu dem Durchlass am Verschlusskörper angeordnet sein. Durch die Anordnung der Sensoreinheit und des Durchlasses im gleichen Axialbereich kann das Magnetelement die Sensoreinheit innerhalb der Kolbenstange im Bereich des Durchlasses passieren, sodass die Sensoreinheit das Magnetfeld des Magnetelements detektieren und die Position des Kolbens im Kolbenraum bestimmen kann. Durch die Wahl eines radialen Abstands zwischen der Sensoreinheit und des Durchlasses kann die Messgenauigkeit der Sensoreinheit eingestellt werden. Bei kleinen Abständen ist die Abschirmung des Magnetfeldes des Magnetelements durch den Verschlusskörper geringer. Dadurch kann ein kleineres Magnetelement innerhalb der Kolbenstange verwendet werden, wodurch auch die Kolbenstange kleiner dimensioniert werden kann. Dadurch kann der Bauraum des Aktuators insgesamt reduziert werden.

Insbesondere ist das Magnetelement mittels mindestens eines Befestigungselements innerhalb der Kolbenstange form- und/oder kraftschlüssig arretiert. Das Befestigungselement kann insbesondere Teil des Lagerelements sein. Durch die form- und/oder kraftschlüssige Arretierung des Magnetelements innerhalb der Kolbenstange kann verhindert werden, dass sich das Magnetelement innerhalb der Kolbenstange verschiebt. Dadurch können fehlerhafte Messungen zur Positionsbestimmung des Kolbens innerhalb des Kolbenraums durch die Sensoreinheit vermieden werden. Insbesondere kann lediglich das Befestigungselement an den Hohlraum der Kolbenstange angepasst werden. Eine kostenintensive Bearbeitung des Magnetelements kann dadurch vermieden werden. Somit können die Herstellkosten des Aktuators gesenkt, die Montage der Magnetelemente vereinfacht und gleiche Magnetelemente in die Hohlräume von Kolbenstangen mit unterschiedlichen Durchmessern eingesetzt und durch das jeweilige Befestigungselement innerhalb der Kolbenstange sicher arretiert werden.

Vorzugsweise ist das mindestens eine Befestigungselement als scheibenförmiger oder zylinderförmiger Presskörper ausgebildet. Dem Magnetelement kann insbesondere innerhalb der Kolbenstange mindestens ein Befestigungselement vor- und/oder nachgelagert angeordnet sein. Das mindestens eine Befestigungselement kann insbesondere einen zumindest teilweise in axialer Richtung vorstehenden Federkörper zur axialseitigen Kontaktierung des Magnetelements aufweisen. Das Befestigungselement kann insbesondere plastisch und/oder elastisch verformbar ausgebildet sein. Dadurch kann eine form- und/oder kraftschlüssige Verbindung innerhalb des Hohlraums der Kolbenstange durch das axiale Einpressen des Befestigungselements in den Hohlraum erfolgen. Die scheibenförmige Ausführungsform des Befestigungselements weist eine vergleichsweise kleine Kontaktfläche mit der Kolbenstange auf, wodurch diese einfach und schnell in den Hohlraum der Kolbenstange axial eingepresst werden kann. Die zylinderförmige Ausführungsform des Befestigungselements weist eine im Vergleich zur scheibenförmige Ausführungsform des Befestigungselements größere Kontaktfläche mit der Kolbenstange auf, wodurch diese beim axialen Einpressen nicht verkanten kann und eine stärkere kraftschlüssige Verbindung zwischen dem Befestigungselement und der Kolbenstange innerhalb des Hohlraums ermöglicht. Die zylinderförmige Ausführungsform des Befestigungselements kann in radialer Richtung vorstehende Erhebungen aufweisen. Insbesondere weist die zylinderförmige Ausführungsform des Befestigungselements mindestens zwei radial abstehende und sich jeweils entlang des Umfangs erstreckende Erhebungen auf. Dadurch kann eine kleinere Kontaktfläche zwischen dem Befestigungselement und der Kolbenstange innerhalb des Hohlraums realisiert werden, wodurch das axiale Einpressen schnell und einfach erfolgen kann. Durch die zylindrische Form kann ein Verkanten des Befestigungselements vermieden werden. Durch den in axialer Richtung vorstehenden Federkörper können Einpresstoleranzen, insbesondere das Spaltmaß zwischen dem Befestigungselement und dem Magnetelement, kompensiert werden. Insbesondere können durch den Federkörper temperaturbedingte Materialänderungen der miteinander in Kontakt stehenden Bauteile, insbesondre der Kolbenstange, des Magnetelements und des Befestigungselements, kompensiert werden. Durch den in axialer Richtung vorstehenden Federkörper kann eine Kontaktierung von dem Befestigungselement und dem Magnetelement auch dann erfolgen, wenn die jeweiligen Kontaktflächen unterschiedlich ausgebildet und lediglich eine punktuelle Kontaktierung untereinander ermöglichen. Der Hohlraum kann unterschiedliche Durchmesser aufweisen. Insbesondere kann der Durchmesser im Bereich des ersten Endabschnitts der Kolbenstange größer als im Bereich des zweiten Endabschnitts der Kolbenstange ausgebildet sein. Dadurch kann die Strecke und somit auch der Reibwiderstand für das axiale Einpressen des Magnetelements und/oder des Befestigungselements reduziert werden. Dies begünstigt ein einfaches und schnelles Einpressen des Magnetelements und/oder des Befestigungselements.

Besonders bevorzugt ist das Magnetelement als ein kunststoffgebundener Magnet ausgebildet. Dadurch kann das Magnetelement in die Kolbenstange form- und/oder kraftschlüssig einspritzt werden. Somit kann das Magnetelement an die Kontur des Hohlraums innerhalb der Kolbenstange anpasst werden. Vorzugsweise weist die Kolbenstange an einer Stirnfläche eines zweiten Endabschnitt eine sich in axialer Richtung erstreckende Öffnung auf. Die Öffnung kann einen kleineren Durchmesser als der Hohlraum aufweisen. Dadurch kann sich das Magnetelement zumindest abschnittweise in axialer Richtung durch die Öffnung und aus dem Hohlraum hinaus erstrecken. Dadurch kann das Magnetelement am zweiten Endabschnitt formschlüssig an der Stirnfläche und einer der Stirnfläche gegenüberliegenden Kontaktfläche innerhalb des Hohlprofils formschlüssig anliegen. Eine derartige Anordnung benötigt in der Regel kein zusätzliches Befestigungsmittel. Die notwendige Magnetfeldstärke kann so einfach und individuell über die Menge des eingebrachten Magnetelements in der Kolbenstange eingestellt werden.

Vorzugsweise ist der Kolben entlang eines im Kolbenraum angeordneten Hubbereichs axial verschiebbar, wobei der Verschlusskörper die axiale Verschiebung des Kolbens in einer Richtung begrenzt. Dadurch kann die Wandung des Verschlusskörpers als Anschlag für den Kolben dienen. Der Verschlusskörper kann insbesondere mindestens einen in den Kolbenraum ragenden Vorsprung zur Begrenzung der axialen Verschiebung des Kolbens entlang des Hubbereichs aufweisen. Der mindestens eine Vorsprung kann bevorzugt ringförmig ausgebildet sein und sich entlang der Wandung des Kolbenraums erstrecken. Dadurch kann der mindestens eine Vorsprung zusätzlich als Zentrierungshilfe des Verschlusskörpers am Grundkörper verwendet werden. Auf diese Weise wird die Montage des Verschlusskörpers am Grundkörper vereinfacht.

Eine weitere Ausführungsform betrifft eine Kraftfahrzeugkomponente zur elektrohydraulischen Betätigung von Kraftfahrzeugaggregaten mit mindestens einem Aktuator, insbesondere Parksperrenaktuator, zur mittelbaren oder unmittelbaren Arretierung einer Antriebskomponente gemäß den Merkmalen der Beschreibung.

Die Kraftfahrzeugkomponente kann in einem Kraftfahrzeug mittelbar oder unmittelbar an einem Kraftfahrzeugaggregat, insbesondere Kraftfahrzeugkupplung und/oder Kraftfahrzeuggetriebe, angeordnet werden. Die Kraftfahrzeugkomponente weist neben dem mindestens einen Aktuator zusätzlich noch mindestens eine Ventileinheit zur mittelbaren oder unmittelbaren Betätigung einer Kraftfahrzeugkupplung auf. Die mindestens eine Ventileinheit der Kraftfahrzeugkomponente kann bevorzugt die Kraftfahrzeugkupplung, welche insbesondere als Klauenkupplung, Doppelkupplung oder dergleichen ausgebildet ist, mittelbar oder unmittelbar betätigen und somit eine Antriebswelle eines Kraftfahrzeugmotors, welcher insbesondere als Verbrennungsmotor oder Elektromotor ausgebildet ist, mit mindestens einer Getriebeeingangswelle des Kraftfahrzeuggetriebes oder einer Kraftfahrzeugachse, insbesondere Radachse, verbinden. Die Verbindung kann über mindestens eine Teilkupplung oder eine Klauenkupplung erfolgen. Dadurch kann ein Drehmoment von einer Antriebswelle des Kraftfahrzeugmotors auf mindestens eine Getriebeeingangswelle des Kraftfahrzeuggetriebes oder die Kraftfahrzeugachse sicher übertragen werden. Insbesondere kann durch die Kraftfahrzeugkupplung, insbesondere Klauenkupplung, die Vorderachse des Kraftfahrzeugs von der Antriebswelle des Kraftfahrzeugmotors mittelbar oder unmittelbar entkoppelt werden. Die gemeinsame Anordnung der mindestens einen Ventileinheit und des mindestens einen Aktuators ermöglicht eine bauraumsparende Kraftfahrzeugkomponente, die zur Betätigung mehrerer Kraftfahrzeugaggregate ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine seitliche Schnittansicht einer ersten Ausführungsform eines Aktuators,
Fig. 2: eine seitliche Schnittansicht einer Kolbenstange eines Aktuators,
Fig. 3: eine perspektivische Schnittansicht eines Befestigungselements innerhalb einer Kolbenstange, und
Fig. 4: eine seitliche Schnittansicht eines Magnetelements innerhalb einer Kolbenstange.

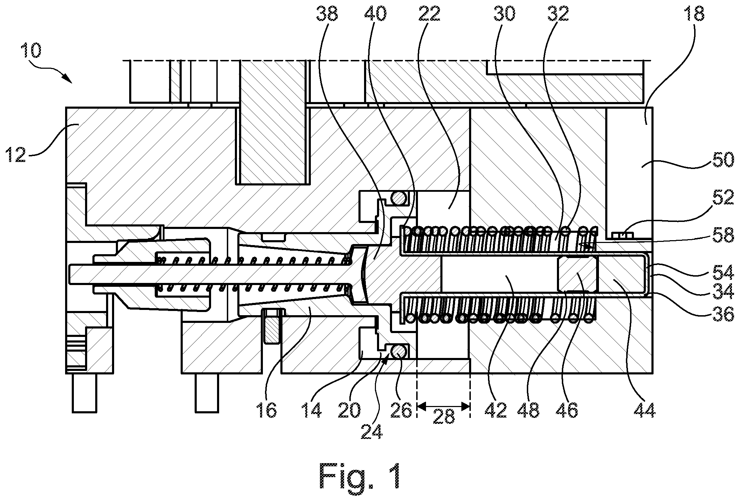

Der in Fig. 1 dargestellte Aktuator 10 kann zur mittelbaren oder unmittelbaren Arretierung einer Antriebskomponente eines Kraftfahrzeugs verwendet werden. Der Aktuator 10 weist dazu einen Grundkörper 12 mit einem Kolbenraum 14 zur Aufnahme eines in dem Kolbenraum 14 axial verschiebbaren Kolbens 16 auf. Der Kolbenraum 14 wird durch einen Verschlusskörper 18 axialseitig verschlossen. Der Verschlusskörper 18 kann dabei die axiale Verschiebung des Kolbens 16 innerhalb des Kolbenraums begrenzen. Der Kolbenraum 14 wird dabei durch den Kolben 16 in eine erste Druckkammer 20 und eine zweite Druckkammer 22 unterteilt. Der Kolben 16 weist dazu am Außenumfang mindestens eine Nut 24 zur Aufnahme mindestens einer Dichtung 26 auf. Die Erhöhung des Drucks in der ersten Druckkammer 20 kann zu einer Verschiebung des Kolbens 16 in Richtung des Verschlusskörpers 18 führen. Die zweite Druckkammer 22 kann drucklos zwischen dem Kolben 16 und dem Verschlusskörper 18 im Kolbenraum 14 ausgebildet sein. Die axiale Verschiebung des Kolbens 16 in Richtung der ersten Druckkammer 20 wird durch eine Querschnittverkleinerung des Kolbenraums 14 begrenzt. Der Kolben 16 kann somit nur entlang eines vordefinierten Hubbereichs 28 in dem Kolbenraum 14 axial verfahren werden. Der Verschlusskörper 18 weist eine sich in axialer Richtung erstreckende zylinderförmige Ausnehmung 30 zur Lagerung eines Federelements 32 und einen sich in axialer Richtung durch den Verschlusskörper 18 erstreckenden zylinderförmigen Durchlass 34 zur Lagerung einer Kolbenstange 36 auf. Die Kolbenstange 36 kann über ein Lagerelement 38 bewegungsfest mit dem Kolben 16 verbunden werden. Die Kolbenstange 36 weist einen sich in radialer Richtung erstreckenden ersten Endabschnitt 40 zur Lagerung des Lagerelement 38 und des Federelements 32 auf, wobei das Federelement 32 die Kolbenstange 36 mit einer der Verschiebungsrichtung des Kolbens 16 entgegengesetzten Rückstellkraft beaufschlägt. Die Kolbenstange 36 weist einen in axialer Richtung geöffneten Hohlraum 42 zur Aufnahme eines Magnetelements 44 innerhalb der Kolbenstange 36 auf. Das Magnetelement 44 kann durch ein Befestigungselement 46 form- und/oder kraftschlüssig innerhalb der Kolbenstange 36 arretiert werden. Das Befestigungselement 46 weist zusätzlich zwei radial abstehende und sich jeweils entlang des Umfangs des Befestigungselements 46 erstreckende Erhebungen 48 auf. Dadurch kann eine kleinere Kontaktfläche zwischen dem Befestigungselement 46 und der Kolbenstange 36 innerhalb des Hohlraums 42 realisiert werden, wodurch das axiale Einpressen des Befestigungselements 46 schnell und einfach erfolgen kann. Durch die zylindrische Form kann ein Verkanten des Befestigungselements 46 innerhalb des Hohlraums 42 vermieden werden. Der Verschlusskörper weist eine an einer dem Kolbenraum 14 abgewandten Stirnseite des Verschlusskörpers 18 angeordnete Aussparung 50 zur Aufnahme einer Sensoreinheit 52 auf. Die Sensoreinheit 52 und der Durchlass 34 können zumindest teilweise im gleichen Axialbereich und in radialer Richtung beabstandet voneinander angeordnet werden. Durch die Anordnung der Sensoreinheit 52 und des Durchlasses 34 im gleichen Axialbereich kann das Magnetelement 44 die Sensoreinheit 52 innerhalb der Kolbenstange 36 im Bereich des Durchlasses 34 passieren, sodass die Sensoreinheit 52 das Magnetfeld des Magnetelements 44 detektieren und die Position des Kolbens 16 im Kolbenraum 14 bestimmen kann. Durch die Wahl eines radialen Abstands zwischen der Sensoreinheit 52 und des Durchlasses 34 kann die Messgenauigkeit der Sensoreinheit 52 eingestellt werden. Dadurch wird eine bauraumsparende und messgenaue Sensoranordnung in dem Aktuator 10 ermöglicht.

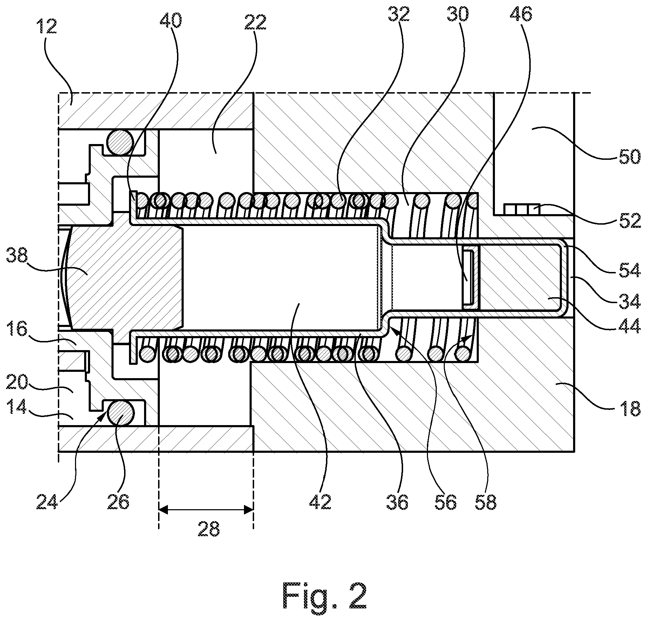

Die in Fig. 2 dargestellte Kolbenstange 36 weist einen Hohlraum 42 mit zwei unterschiedlichen Durchmessern auf. Das Magnetelement 44 ist in einem zweiten Endabschnitt 54 der Kolbenstange 36, welches innerhalb des Durchlasses 34 gelagert ist, angeordnet und durch ein scheibenförmiges Befestigungselement 46 innerhalb der Kolbenstange 36 arretiert. Der durch die zwei unterschiedlichen Durchmesser an der Kolbenstange 36 ausgebildete Übergang kann zur Begrenzung der axialen Verschiebung der Kolbenstange 36 als axialer Anschlag 56, dessen axiale Verschiebung durch eine sich in radialer Richtung erstreckenden Lagerfläche 58 des Verschlusskörpers 18 begrenzt wird, ausgebildet sein.

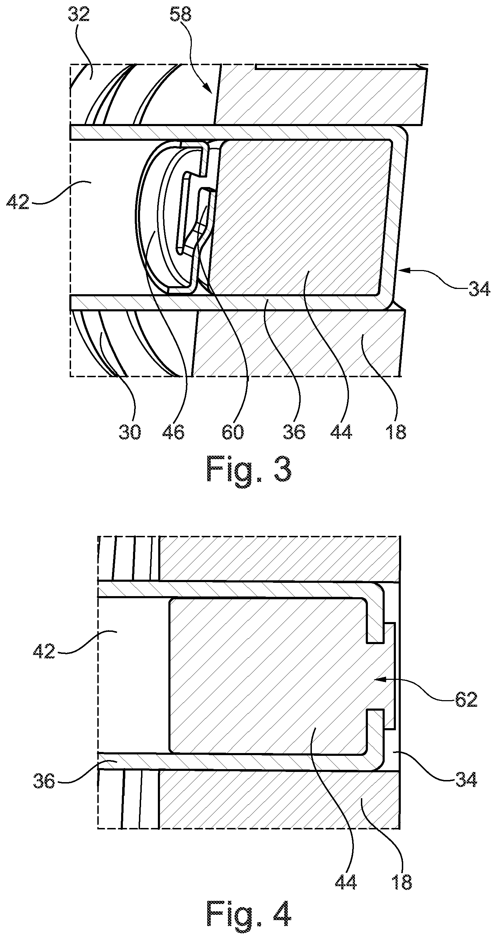

Das in Fig. 3 dargestellte Befestigungselement 46 weist einen zumindest teilweise in axialer Richtung vorstehenden Federkörper 60 zur axialseitigen Kontaktierung des Magnetelements 44 auf. Durch den in axialer Richtung vorstehenden Federkörper 60 können Einpresstoleranzen, insbesondere das Spaltmaß zwischen dem Befestigungselement 46 und dem Magnetelement 44, kompensiert werden.

Das in Fig. 4 dargestellte Magnetelement 44 ist im Bereich des zweiten Endabschnitts 54 innerhalb der Kolbenstange 36 formschlüssig an einer sich in axialer Richtung erstreckenden Öffnung 62 arretiert. Diese Ausführungsform eignet sich insbesondere beim Einsatz von kunststoffgebundenen Magnetelementen 44, die in den Hohlraum 42 direkt eingespritzt werden. Eine derartige Anordnung benötigt keine zusätzliches Befestigungsmittel.

### Bezugszeichenliste

- 10: Aktuator
- 12: Grundkörper
- 14: Kolbenraum
- 16: Kolben
- 18: Verschlusskörper
- 20: Erste Druckkammer
- 22: Zweite Druckkammer
- 24: Nut
- 26: Dichtung
- 28: Hubbereich
- 30: Ausnehmung
- 32: Federelement
- 34: Durchlass
- 36: Kolbenstange
- 38: Lagerelement
- 40: Erster Endabschnitt
- 42: Hohlraum
- 44: Magnetelement
- 46: Befestigungselement
- 48: Erhebung
- 50: Aussparung
- 52: Sensoreinheit
- 54: Zweiter Endabschnitt
- 56: Anschlag
- 58: Lagerfläche
- 60: Federkörper
- 62: Öffnung

## Patentansprüche

1. Aktuator, insbesondere Parksperrenaktuator, zur mittelbaren oder unmittelbaren Arretierung einer Antriebskomponente eines Kraftfahrzeugs, aufweisend
einen Grundkörper (12) mit einem Kolbenraum (14) zur Aufnahme und Führung eines innerhalb des Kolbenraums (14) axial verschiebbar gelagerten Kolbens (16),
einen Verschlusskörper (18) zum axialseitigen Verschließen des Kolbenraums (14),
eine mit dem Kolben (16) axial verschiebbar verbundene Kolbenstange (36) zur Positionsbestimmung des Kolbens (16) im Kolbenraum (14),
mindestens ein mit der Kolbenstange (36) axial verschiebbar verbundenes Magnetelement (44) zum Bereitstellen eines Magnetfeldes und mindestens eine an dem Verschlusskörper (18) stationär angeordnete Sensoreinheit (52) zur Detektion des Magnetfeldes des Magnetelements (44),
wobei die Kolbenstange (36) einen in axialer Richtung geöffneten Hohlraum (42) zur zumindest teilweisen Aufnahme des Magnetelements (44) innerhalb der Kolbenstange (36) aufweist,
**dadurch gekennzeichnet, dass**
der Verschlusskörper (18) eine Ausnehmung (30) aufweist, in welcher ein Federelement (32) gelagert ist,
wobei das Federelement (32) die Kolbenstange (36) mit einer der Aktuierungsrichtung des Kolbens (16) entgegengesetzten Rückstellkraft beaufschlagt,
wobei die Aktuierungsrichtung eine Verschiebung des Kolbens (16) in Richtung des Verschlusskörpers (18) darstellt,
wobei insbesondere sich die Kolbenstange (36) zumindest teilweise in axialer Richtung durch das Federelement (32) hindurch erstreckt,
wobei insbesondere das Federelement (32) axialseitig an einem sich in radialer Richtung erstreckenden ersten Endabschnitt (40) der Kolbenstange (36) anliegt,
wobei insbesondere das Federelement (32) axialseitig an einer sich in radialer Richtung erstreckenden Lagerfläche (58) innerhalb der Ausnehmung (30) des Verschlusskörpers (18) anliegt.

2. Aktuator nach Anspruch 1, wobei die mindestens eine Sensoreinheit (52) innerhalb einer Aussparung (50) am Verschlusskörper (18) angeordnet ist,
wobei insbesondere die Aussparung (50) an einer dem Kolbenraum (14) abgewandten Stirnseite des Verschlusskörpers (18) ausgebildete ist.

3. Aktuator nach Anspruch 1 oder 2, wobei der Verschlusskörper (18) einen sich in axialer Richtung der Kolbenstange (36) erstreckenden Durchlass (34) zur zumindest teilweisen Durchführung der Kolbenstange (36) aufweist.

4. Aktuator nach Anspruch 3, wobei die mindestens eine Sensoreinheit (52) und der Durchlass (34) zumindest teilweise im gleichen Axialbereich angeordnet sind,
wobei insbesondere die mindestens eine Sensoreinheit (52) in radialer Richtung beabstandet zu dem Durchlass (34) am Verschlusskörper (18) angeordnet ist.

5. Aktuator nach einem der Ansprüche 1 bis 4, wobei das Magnetelement (44) mittels mindestens eines Befestigungselements (46) innerhalb der Kolbenstange (36) form- und/oder kraftschlüssig arretiert ist.

6. Aktuator nach Anspruch 5, wobei das mindestens eine Befestigungselement (46) als scheibenförmiger oder zylinderförmiger Presskörper ausgebildet ist,
wobei insbesondere dem Magnetelement (44) innerhalb der Kolbenstange (36) mindestens ein Befestigungselement (46) vor- und/oder nachgelagert angeordnet ist, wobei insbesondere das mindestens eine Befestigungselement (46) einen zumindest teilweise in axialer Richtung vorstehenden Federkörper (60) zur axialseitigen Kontaktierung des Magnetelements (44) aufweist.

7. Aktuator nach einem der Ansprüche 1 bis 6, wobei das Magnetelement (44) als ein kunststoffgebundener Magnet ausgebildet ist,
wobei insbesondere das Magnetelement (44) in die Kolbenstange (36) form- und/oder kraftschlüssig einspritzbar ist.

8. Aktuator nach einem der Ansprüche 1 bis 7, wobei der Kolben entlang eines im Kolbenraum (14) angeordneten Hubbereichs (28) axial verschiebbar ist, wobei der Verschlusskörper (18) die axiale Verschiebung des Kolbens (16) in einer Richtung begrenzt.

9. Kraftfahrzeugkomponente zur elektrohydraulischen Betätigung von Kraftfahrzeugaggregaten mit mindestens einem Aktuator (10), insbesondere Parksperrenaktuator, zur mittelbaren oder unmittelbaren Arretierung einer Antriebskomponente nach einem der Ansprüche 1 bis 8.

## Claims

1. Actuator, in particular a parking lock actuator, for indirectly or directly locking a drive component of a motor vehicle, having
a main body (12) with a piston chamber (14) for receiving and guiding a piston (16) which is mounted so as to be axially displaceable within the piston chamber (14),
a closure body (18) for axially closing the piston chamber (14),
a piston rod (36), which is connected to the piston (16) so as to be axially displaceable for determining the position of the piston (16) in the piston chamber (14), at least one magnetic element (44) which is connected to the piston rod (36) so as to be axially displaceable for providing a magnetic field, and at least one sensor unit (52) which is arranged on the closure body (18) so as to be stationary for detecting the magnetic field of the magnetic element (44),
wherein the piston rod (36) has a cavity (42) open in the axial direction for at least partially receiving the magnetic element (44) within the piston rod (36), **characterized in that**
the closure body (18) has a recess (30) in which a spring element (32) is mounted,
wherein the spring element (32) impinges the piston rod (36) with a restoring force counter to the actuation direction of the piston (16),
wherein the actuation direction represents a displacement of the piston (16) in the direction of the closure body (18),
wherein in particular the piston rod (36) extends at least partially in the axial direction through the spring element (32),
wherein in particular the spring element (32) bears axially on a first end portion (40) of the piston rod (36) that extends in the radial direction,
wherein in particular the spring element (32) bears axially on a bearing surface (58) extending in the radial direction within the recess (30) of the closure body (18).

2. Actuator according to Claim 1, wherein the at least one sensor unit (52) is arranged within a clearance (50) on the closure body (18),
wherein in particular the clearance (50) is formed on an end side of the closure body (18) that faces away from the piston chamber (14).

3. Actuator according to Claim 1 or 2, wherein the closure body (18) has a passage (34), which extends in the axial direction of the piston rod (36), for at least partially passing through the piston rod (36).

4. Actuator according to Claim 3, wherein the at least one sensor unit (52) and the passage (34) are arranged at least partially in the same axial region,
wherein in particular the at least one sensor unit (52) is arranged on the closure body (18) so as to be spaced apart from the passage (34) in the radial direction.

5. Actuator according to one of Claims 1 to 4, wherein the magnetic element (44) is locked in a form-fitting and/or force-fitting manner within the piston rod (36) by means of at least one fastening element (46).

6. Actuator according to Claim 5, wherein the at least one fastening element (46) is in the form of a disc-shaped or cylindrical pressed body,
wherein in particular at least one fastening element (46) is arranged upstream and/or downstream of the magnetic element (44) within the piston rod (36),
wherein in particular the at least one fastening element (46) has a spring body (60), which projects at least partially in the axial direction, for axially contacting the magnetic element (44).

7. Actuator according to one of Claims 1 to 6, wherein the magnetic element (44) is embodied as a plastic-bonded magnet,
wherein in particular the magnetic element (44) is injectable into the piston rod (36) in a form-fitting and/or force-fitting manner.

8. Actuator according to one of Claims 1 to 7, wherein the piston is axially displaceable along a stroke region (28) arranged in the piston chamber (14), wherein the closure body (18) delimits the axial displacement of the piston (16) in one direction.

9. Motor vehicle component for the electro-hydraulic actuation of motor vehicle assemblies, having at least one actuator (10), in particular a parking lock actuator, for indirectly or directly locking a drive component according to one of Claims 1 to 8.

## Revendications

1. Actionneur, en particulier actionneur de frein de stationnement, pour le verrouillage indirect ou direct d'un composant d'entraînement d'un véhicule à moteur, comportant
un corps de base (12) avec une chambre de piston (14) pour recevoir et guider un piston (16) monté de manière à pouvoir être coulissé axialement à l'intérieur de la chambre de piston (14),
un corps de fermeture (18) pour fermer la chambre de piston (14) sur le côté axial,
une tige de piston (36) reliée de manière à pouvoir coulisser axialement au piston (16) pour déterminer la position du piston (16) dans la chambre de piston (14), au moins un élément magnétique (44) relié de manière à pouvoir coulisser axialement à la tige de piston (36) pour fournir un champ magnétique et au moins une unité de détection (52) disposée de manière fixe sur le corps de fermeture (18) pour détecter le champ magnétique de l'élément magnétique (44),
la tige de piston (36) comportant une cavité (42) ouverte dans la direction axiale pour recevoir au moins en partie l'élément magnétique (44) à l'intérieur de la tige de piston (36),
**caractérisé en ce que**
le corps de fermeture (18) comporte un creux (30) dans lequel est monté un élément de ressort (32),
l'élément de ressort (32) soumettant la tige de piston (36) à l'action d'une force de rappel opposée à la direction d'actionnement du piston (16),
la direction d'actionnement représentant un coulissement du piston (16) en direction du corps de fermeture (18), en particulier, la tige de piston (36) s'étendant au moins en partie dans la direction axiale à travers l'élément de ressort (32),
en particulier, l'élément de ressort (32) reposant sur le côté axial sur une première section d'extrémité (40) de la tige de piston (36) s'étendant dans la direction radiale,
en particulier, l'élément de ressort (32) reposant sur le côté axial sur une surface d'appui (58) s'étendant dans la direction radiale à l'intérieur du creux (30) du corps de fermeture (18).

2. Actionneur selon la revendication 1, l'au moins une unité de détection (52) étant disposée à l'intérieur d'un évidement (50) sur le corps de fermeture (18),
en particulier, l'évidement (50) étant formé sur un côté frontal du corps de fermeture (18) opposé à la chambre de piston (14).

3. Actionneur selon la revendication 1 ou 2, le corps de fermeture (18) comportant un passage (34) s'étendant dans la direction axiale de la tige de piston (36) pour le passage au moins partiel de la tige de piston (36).

4. Actionneur selon la revendication 3, l'au moins une unité de détection (52) et le passage (34) étant disposés au moins en partie dans la même zone axiale,
en particulier, l'au moins une unité de détection (52) étant disposée sur le corps de fermeture (18) de manière espacée dans la direction radiale par rapport au passage (34).

5. Actionneur selon l'une des revendications 1 à 4, l'élément magnétique (44) étant verrouillé par complémentarité de forme et/ou à force au moyen d'au moins un élément de fixation (46) à l'intérieur de la tige de piston (36).

6. Actionneur selon la revendication 5, l'au moins un élément de fixation (46) étant formé comme un corps de presse en forme de disque ou de cylindre,
en particulier au moins un élément de fixation (46) étant monté en amont et/ou en aval en particulier de l'élément magnétique (44) à l'intérieur de la tige de piston (36), en particulier, l'au moins un élément de fixation (46) comportant un corps de ressort (60) faisant saillie au moins en partie dans la direction axiale pour venir en contact sur le côté axial avec l'élément magnétique (44).

7. Actionneur selon l'une des revendications 1 à 6, l'élément magnétique (44) étant formé comme un aimant lié à la matière plastique,
en particulier, l'élément magnétique (44) pouvant être injecté par complémentarité de forme et/ou à force dans la tige de piston (36).

8. Actionneur selon l'une des revendications 1 à 7, le piston pouvant être coulissé axialement le long d'une zone de course (28) disposée dans la chambre de piston (14), le corps de fermeture (18) limitant le coulissement axial du piston (16) dans une direction.

9. Composant de véhicule à moteur pour l'actionnement électrohydraulique de groupes de véhicule à moteur avec au moins un actionneur (10), en particulier un actionneur de frein de stationnement, pour le verrouillage indirect ou direct d'un composant d'entraînement selon l'une des revendications 1 à 8.
